# EUROPÄISCHE PATENTSCHRIFT

(11) **EP 2 815 681 B1**
(45) Veröffentlichungstag und Bekanntmachung des Hinweises auf die Patenterteilung: **11.11.2020**
(21) Anmeldenummer: 14401072.5
(22) Anmeldetag: 11.06.2014
(51) Int. Cl.: A47C 20/08, F16H 25/20

(54) **VERSTELLMECHANIK ZUR VERSTELLUNG VON BEWEGLICHEN MÖBELTEILEN**
ADJUSTING MECHANISM FOR ADJUSTING MOVABLE FURNITURE PARTS
MÉCANISME DE RÉGLAGE DESTINÉ À RÉGLER LES PARTIES MOBILES D'UN MEUBLE

(30) Priorität: 19.06.2013 DE 102013106388
(43) Veröffentlichungstag der Anmeldung: 24.12.2014
(73) Patentinhaber: limoss GmbH & Co. KG, 58300 Wetter (DE)
(72) Erfinder: Kristen, Martin, 45883 Gelsenkirchen (DE)
(74) Vertreter: Köchling, Conrad-Joachim

(56) Entgegenhaltungen:
- EP-A1- 0 583 660
- EP-A1- 1 161 907
- US-A1- 2010 064 830

## Beschreibung

Die Erfindung betrifft eine Verstellmechanik zur Verstellung von beweglichen Möbelteilen, bestehend aus einem an Bestandteilen der Verstellmechanik befestigbaren linearen Stellantrieb, der einen Antriebsmotor mit einer in einem Verkleidungsrohr drehbar und vom Antriebsmotor antreibbar gelagerten Gewindespindel, einer auf der Gewindespindel angeordneten Spindelmutter, die unverdrehbar aber längsverschieblich im Verkleidungsrohr geführt ist, sowie einem Gleiter, der mit der Spindelmutter bewegungsgekoppelt ist und außen auf dem Verkleidungsrohr längs desselben verschieblich geführt ist, wobei der Gleiter über ein Hebelgetriebe mit einem Stellmittel für ein Möbelteil, vorzugsweise mit einem drehbaren Rohr der Verstellmechanik gekoppelt ist, und wobei das Verkleidungsrohr Seitenflächen aufweist, von denen mindestens eine einen Längsschlitz als Durchgriff für Bestandteile des Gleiters zur Verbindung mit der Spindelmutter, sowie eine Unterseite und eine Oberseite, wobei die Oberseite von dem Gleiter übergriffen ist.

In den Zeichnungsfiguren 4 und 5 ist eine Verstellmechanik gezeigt, wie sie im Stand der Technik bekannt ist. Sie besteht aus einem an Bestandteilen der Verstellmechanik befestigbaren linearen Stellantrieb 1', der einen Antriebsmotor 2' mit einer in einem Verkleidungsrohr 3' drehbar und vom Antriebsmotor 2' antreibbar gelagerten Gewindespindel 4', einer auf der Gewindespindel 4' angeordneten Spindelmutter 5', die unverdrehbar, aber längs verschieblich im Verkleidungsrohr 3' geführt ist, sowie einem Gleiter 6', der mit der Spindelmutter 5' bewegungsgekoppelt ist und außen auf dem Verkleidungsrohr 3' längs desselben verschieblich geführt ist. Der Gleiter 6' ist über ein Hebelgetriebe 7' mit einem Stellmittel 8' für ein Möbelteil, vorzugsweise einem drehbaren Rohr der Verstellmechanik gekoppelt ist. Das Verkleidungsrohr 3' weist Seitenflächen auf, von denen mindestens eine, vorzugsweise beide einen Längsschlitz 9' als Durchgriff für Bestandteile des Gleiters 6' zur Verbindung mit der Spindelmutter 5' aufweisen. Des Weiteren weist das Verkleidungsrohr 3' eine Unterseite auf und eine Oberseite, die von dem Gleiter 6' übergriffen ist. Das Verkleidungsrohr weist vorzugsweise rechteckigen oder quadratischen Querschnitt auf. Im Stand der Technik sind an dem Gleitstück 6' an beiden Seitenbereichen Bauteile 10' mit jeweils zwei Schrauben 11' verschraubt. Die Bauteile 10'sind jeweils wiederum mit einem Hebel 12' vernietet. Die Nietverbindung ist bei 13' angegeben. Die Hebel 12' sind mit ihrem anderen Ende wiederum drehbar an einem Winkelstück 14' angelenkt. Das Winkelstück 14' ist wiederum jeweils mit zwei Schrauben 15' an einem drehbaren Rohr 8' der Mechanik angeschraubt.

Da diese Elemente als Einzelteile an den entsprechenden Kunden vom Hersteller geliefert werden, der die Möbelstücke damit ausrüsten muss, ist für den Anwender, der diese Bestandteile zusammensetzt, der Aufwand erheblich. Es ist insgesamt die Anordnung von 8 Schrauben erforderlich. Des Weiteren werden die zusätzlichen Bestandteile 10' und die entsprechenden Nieten 13' bzw. 16' als wesentliche Bestandteile benötigt. Auch die Doppelanordnung der Winkel 14' ist ein durchaus erheblicher Aufwand.

Aus der US 2010/064830 A1 ist eine Verstellmechanik ähnlicher Art bekannt, wie im Oberbegriff des Anspruches 1 angegeben ist. Bei der dortigen Lösung sind zwei Hebel vorgesehen, deren Hebelenden seitlich mittels Befestigungsschrauben an dem Gleiter fixiert sind. Die dem Gleiter abgewandten Hebelenden sind unmittelbar und mit einer Drehtraverse verbunden, nämlich verschweißt.

Ausgehend von diesem Stand der Technik liegt der Erfindung die Aufgabe zugrunde, eine Verstellmechanik gattungsgemäßer Art zu schaffen, die unter Verminderung der notwenigen Bestandteile zur Verfügung gestellt werden kann und bei der der Montageaufwand für denjenigen, der die Verstellmechanik an dem Möbelteil anordnen soll, erheblich verringert ist.

Zur Lösung dieser Aufgabe schlägt die Erfindung vor, dass an dem die Oberseite des Verkleidungsrohrs übergreifenden Teil des vorzugsweise im Querschnitt U-förmigen Gleiters ein von der Oberseite abragender Lagerbock fixiert oder ausgebildet ist, dass am Lagerbock ein erstes Ende eines einzigen das Hebelgetriebe bildenden Schwenkhebels angelenkt ist, dass das zweite Ende des Schwenkhebels an einer Lagerlasche angelenkt ist, die an dem Stellmittel für das

Möbelteil, insbesondere dem drehbaren Rohr, der Verstellmechanik befestigt ist.

Gemäß dieser Ausgestaltung ist nur noch ein einziger Schwenkhebel erforderlich. Zudem entfällt durch die Ausbildung des Lagerbockes an dem Gleiter die zusätzliche Anordnung von Befestigungselementen. Der Lagerbock dient zur unmittelbaren Anlenkung des ersten Endes des Schwenkhebels. Dadurch, dass nur ein einziger Schwenkhebel erforderlich ist, ist auch nur eine einzige Lagerlasche erforderlich, die an dem Stellmittel für das Möbelteil befestigt ist. Insgesamt wird durch diese Anordnung eine Verminderung der notwendigen Einzelteile und eine Verminderung der notwendigen Schrauben erreicht, sodass die Verstellmechanik kostengünstiger zur Verfügung gestellt werden kann und die Montage für den Anwender erheblich erleichtert ist.

Bevorzugt ist dabei vorgesehen, dass der Lagerbock zwei zueinander parallel gerichtete Lagerbügel mit Durchgangslochung aufweist, das erste Ende des Schwenkhebels zwischen diesen angeordnet und von einem die Lagerbügel und das erste Ende durchgreifenden Kopfbolzen durchsetzt ist, wobei der Kopf des Kopfbolzens sich an einer Seitenfläche eines ersten Lagerbügels abstützt, und der Schaft des Kopfbolzens über den zweiten Lagerbügel vorragt und mit einem den vorragenden Bereich quer durchsetzenden Splint gesichert und fixiert ist.

Durch die entsprechende Anordnung des Lagerbockes und die Anlenkung des ersten Endes des Schwenkhebels wird erreicht, dass der Drehpunkt des Schwenkhebels von der Oberseite des Verkleidungsrohres ausreichen beabstandet ist, sodass eine störungsfreie Verschwenkung des Schwenkhebels ermöglicht ist. Vorzugsweise ist der Lagerbock mittig des Gleiters und damit mittig zur Oberseite des Verkleidungsrohres ausgerichtet. Die Anordnung des Kopfbolzens mit Splint ermöglicht eine einfache Montage und Handhabung.

Des Weiteren ist bevorzugt vorgesehen, dass die Lagerlasche als L-förmiges Winkelstück ausgebildet ist, dessen erster Schenkel endseitig von einem Niet durchgriffen ist, mittels dessen das zweite Ende des Schwenkhebels drehbar angelenkt ist.

Hierdurch wird eine sichere und funktionelle Verbindung der Teile miteinander erreicht.

Aus dem gleichen Grunde ist vorgesehen, dass im zweiten Schenkel des Winkelstücks zwei Lochungen in Längsrichtung des Schenkels voneinander beabstandet ausgebildet sind, die von Kopfschrauben durchgriffen sind, die in an dem Stellmittel für das Möbelteil, insbesondere an dem drehbaren Rohr, in dessen Längsrichtung voneinander beabstandete Gewindelöcher eingeschraubt sind.

Darüber hinaus ist vorgesehen, dass der Schwenkhebel L-förmig ausgebildet ist, wobei der längere Schenkel das erste Ende des Schwenkhebels und der kürzere Schenkel das zweite Ende des Schenkelhebels aufweist oder bildet.

Hierdurch wird die gewünschte Bewegungsmöglichkeit gefördert und eine flach bauende Anordnung der Elemente in der Einbausollage ermöglicht.

Gegenüber der im Stand der Technik bekannten Lösung wird dem Abnehmer der Verstellmechanik die Arbeit erleichtert, da er gegenüber der im Stand der Technik bekannten Lösung sechs Schrauben weniger einsetzen und einschrauben muss. Des Weiteren werden vier Metallteile und deren Vernietung nicht mehr benötigt.

Ein Ausführungsbeispiel der Erfindung ist in der Zeichnung dargestellt und im Folgenden näher beschrieben.

Es zeigt:

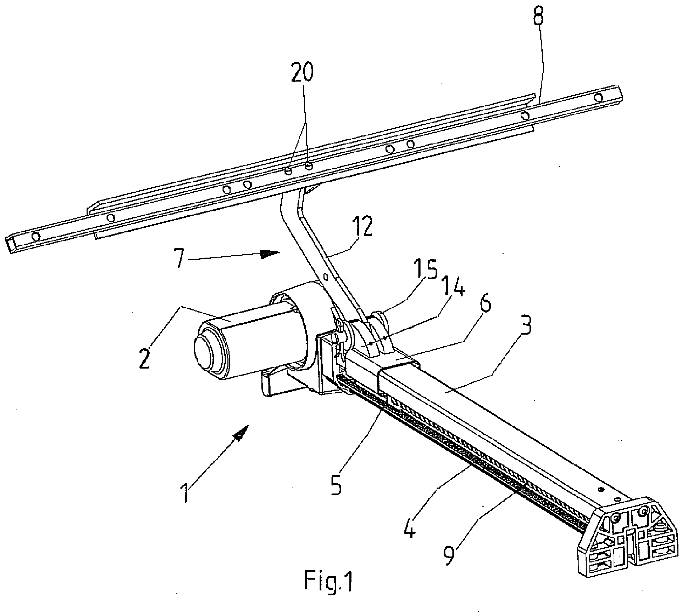

- Fig.1: eine erfindungsgemäße Verstellmechanik in Schrägansicht;
- Fig. 2: desgleichen in Seitenansicht;
- Fig. 3: eine Schrägansicht von hinten gesehen.

Die Verstellmechanik besteht im Wesentlichen aus einem an Bestandteilen der Verstellmechanik befestigbaren linearen Stellantrieb 1, der einen Antriebsmotor 2 mit einer in einem Verkleidungsrohr 3 drehbar und vom Antriebsmotor 2 antreibbar gelagerten Gewindespindel 4, einer auf der Gewindespindel 4 angeordneten Spindelmutter 5, die unverdrehbar aber längsverschieblich im Verkleidungsrohr 3 geführt ist, sowie einem Gleiter 6, der mit der Spindelmutter 5 gekoppelt ist und von dieser mitgenommen wird.

Zusätzlich ist der Gleiter 6 außen auf dem Verkleidungsrohr 3 längs desselben verschieblich geführt, was durch entsprechende Formgebung des Gleiters in Anpassung an die Form des Verkleidungsrohres 3 erreicht wird.

Der Gleiter 6 ist über ein Hebelgetriebe 7 mit einem Stellmittel 8, vorzugsweise mit einem drehbaren Rohr der Verstellmechanik gekoppelt. Das Verkleidungsrohr 3 weist Seitenflächen auf, von denen mindestens eine, vorzugsweise beide einen Längsschlitz 9 aufweisen, der als Durchgriff für Bestandteile des Gleiters 6 zur Verbindung mit der Spindelmutter 5 dienen. Des Weiteren weist das Verkleidungsrohr eine Unterseite und eine Oberseite auf, wobei die Oberseite von dem Gleiter 6 übergriffen ist.

An dem die Oberseite des Verkleidungsrohres 3 übergreifenden Teil des Gleiters 6 ist ein von dessen Oberseite abragender Lagerbock 10 fixiert oder ausgebildet. An diesem Lagerbock 10 ist ein erstes Ende 11 eines das Hebelgetriebe 7 bildenden Schwenkhebels 12 angelenkt. Das zweite Ende 13 des Schwenkhebels 12 ist an einer Lagerlasche 21 angelenkt, die an dem Stellmittel 8 für das Möbelteil, insbesondere dem drehbaren Rohr, der Verstellmechanik befestigt ist.

Der Lagerbock 10 weist zwei zueinander parallel gerichtete Lagerbügel 14 mit Durchgangslochung auf. Das erste Ende 11 des Schwenkhebels 12 ist zwischen diesen Lagerbügeln 14 angeordnet und von einem die Lagerbügel 14 und eine Lochung des ersten Endes 11 durchgreifenden Kopfbolzen 15 durchsetzt, wobei der Kopf des Kopfbolzens 15 sich an einer Seitenfläche eines ersten der Lagerbügel 14 abstützt und der Schaft des Kopfbolzens 15 über den zweiten der Lagerbügel 14 nach außen vorragt und mit einem den vorragenden Bereich quer durchsetzenden Splint 16 gesichert und fixiert ist.

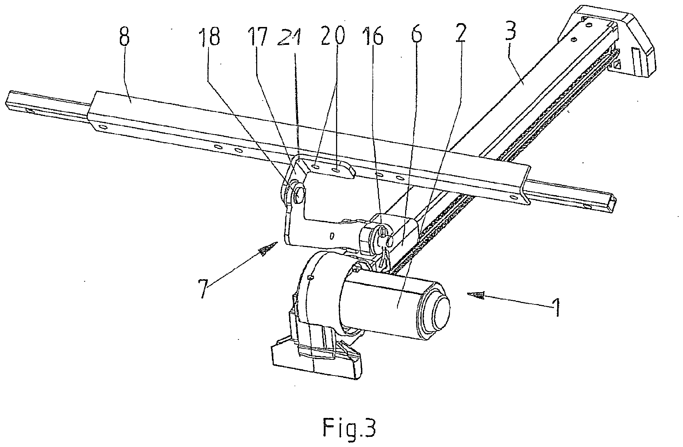

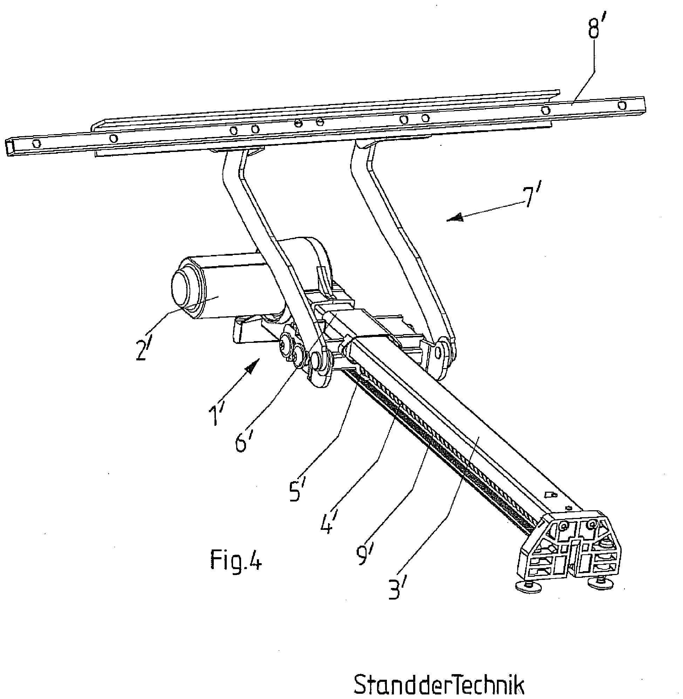

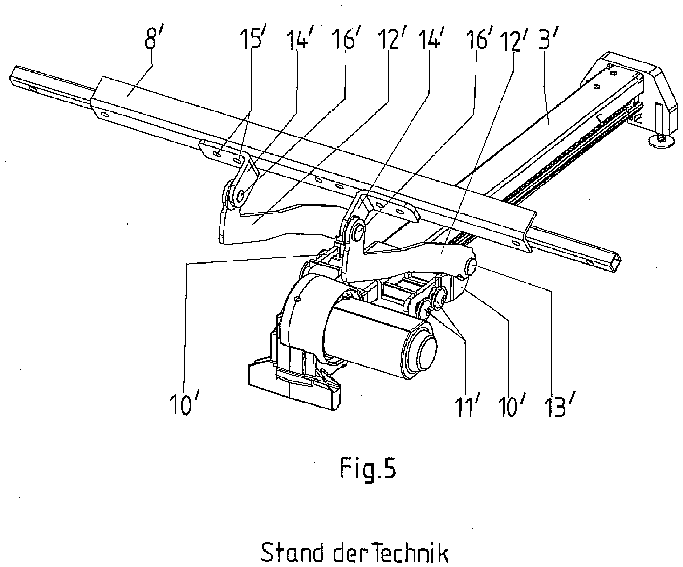

Die Lagerlasche 21 ist als L-förmiges Winkelstück ausgebildet, wie insbesondere in Figur 3 ersichtlich ist, wobei der erste Schenkel 17 des Winkelstücks von einem Niet 18 durchgriffen ist, mittels dessen das zweite Ende 13 des Schenkhebels 12 drehbar angelenkt ist. Im zweiten Schenkel 19 des Winkelstücks sind zwei Lochungen in Längsrichtung des Schenkels 19 voneinander beanstandet ausgebildet, die von Kopfschrauben 20 durchgriffen sind, die in an dem Stellmittel 8 für das Möbelteil in dessen Längsrichtung voneinander beabstandete Gewindelöcher eingeschraubt sind.

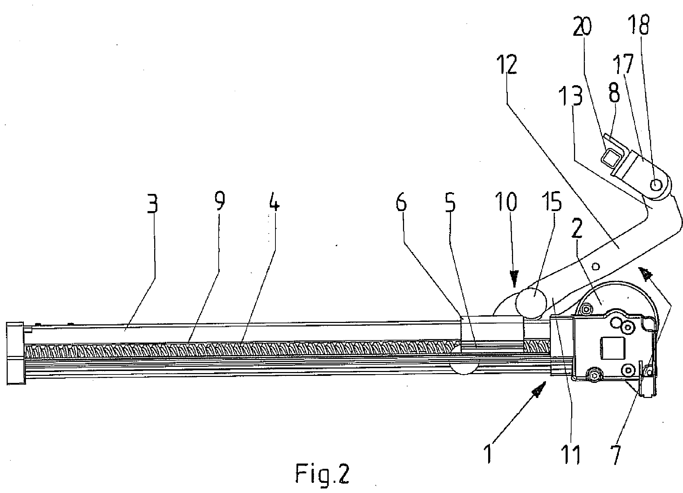

Wie insbesondere in Figur 2 ersichtlich, ist der Schwenkhebel 12 L-förmig ausgebildet, wobei der eingeschlossene Winkel nicht exakt rechtwinklig ist, sondern leicht geöffnet ist, also leicht stumpfwinklig gebildet ist. Der längere Schenkel bildet das erste Ende 11 des Schwenkhebels 12 und der kürzere Schenkel bildet das zweite Ende 13 des Schwenkhebels 12.

Die Erfindung stellt eine Verstellmechanik zur Verfügung, die mit wenigen Schrauben vom Benutzer endmontierbar ist, die aus wenigen Einzelteilen besteht und die kostengünstig und funktionell gestaltet ist.

Die Erfindung ist nicht auf das Ausführungsbeispiel beschränkt, sondern im Rahmen der Patentansprüche vielfach variabel.

## Patentansprüche

1. Verstellmechanik zur Verstellung von beweglichen Möbelteilen, bestehend aus einem an Bestandteilen der Verstellmechanik befestigbaren linearen Stellantrieb (1), der einen Antriebsmotor (2) mit einer in einem Verkleidungsrohr (3) drehbar und vom Antriebsmotor (2) antreibbar gelagerten Gewindespindel (4), einer auf der Gewindespindel (4) angeordneten Spindelmutter (5), die unverdrehbar aber längsverschieblich im Verkleidungsrohr (3) geführt ist, sowie einem Gleiter (6), der mit der Spindelmutter (5) bewegungsgekoppelt ist und außen auf dem Verkleidungsrohr (3) längs desselben verschieblich geführt ist, wobei der Gleiter (6) über ein Hebelgetriebe (7) mit einem Stellmittel (8) für ein Möbelteil, vorzugsweise mit einem drehbaren Rohr der Verstellmechanik gekoppelt ist, und wobei das Verkleidungsrohr (3) Seitenflächen aufweist, von denen mindestens eine einen Längsschlitz (9) als Durchgriff für Bestandteile des Gleiters (6) zur Verbindung mit der Spindelmutter (5) sowie eine Unterseite und eine Oberseite, wobei die Oberseite von dem Gleiter (6) übergriffen ist, **dadurch gekennzeichnet, dass** an dem die Oberseite des Verkleidungsrohrs (3) übergreifenden Teil des vorzugsweise im Querschnitt U-förmigen Gleiters (6) ein von der Oberseite abragender Lagerbock (10) fixiert oder ausgebildet ist, dass am Lagerbock (10) ein erstes Ende (11) eines das Hebelgetriebe bildenden Schwenkhebels (12) angelenkt ist, dass das zweite Ende (13) des Schwenkhebels (12) an einer Lagerlasche (21) angelenkt ist, die an dem Stellmittel (8) für das Möbelteil, insbesondere dem drehbaren Rohr, der Verstellmechanik befestigt ist.

2. Verstellmechanik zur Verstellung von beweglichen Möbelteilen nach Anspruch 1, **dadurch gekennzeichnet, dass** der Lagerbock (10) zwei zueinander parallel gerichtete Lagerbügel (14) mit Durchgangslochung aufweist, das erste Ende (11) des Schwenkhebels (12) zwischen diesen angeordnet und von einem die Lagerbügel (14) und das erste Ende (11) durchgreifenden Kopfbolzen (15) durchsetzt ist, wobei der Kopf des Kopfbolzens (15) sich an einer Seitenfläche eines ersten Lagerbügels (14) abstützt, und der Schaft des Kopfbolzens (15) über den zweiten Lagerbügel (14) vorragt und mit einem den vorragenden Bereich quer durchsetzenden Splint (16) gesichert und fixiert ist.

3. Verstellmechanik zur Verstellung von beweglichen Möbelteilen nach Anspruch 1 oder 2, **dadurch gekennzeichnet, dass** die Lagerlasche (21) als L-förmiges Winkelstück ausgebildet ist, dessen erster Schenkel (17) endseitig von einem Niet (18) durchgriffen ist, mittels dessen das zweite Ende (13) des Schwenkhebels (12) drehbar angelenkt ist.

4. Verstellmechanik zur Verstellung von beweglichen Möbelteilen nach einem Anspruch 3, **dadurch gekennzeichnet, dass** im zweiten Schenkel (19) des Winkelstücks zwei Lochungen in Längsrichtung des Schenkels (19) voneinander beabstandet ausgebildet sind, die von Kopfschrauben (20) durchgriffen sind, die in an dem Stellmittel (8) für das Möbelteil, insbesondere an dem drehbaren Rohr, in dessen Längsrichtung voneinander beabstandete Gewindelöcher eingeschraubt sind.

5. Verstellmechanik zur Verstellung von beweglichen Möbelteilen nach einem der Ansprüche 1 bis 4, **dadurch gekennzeichnet, dass** der Schwenkhebel (12) L-förmig ausgebildet ist, wobei der längere Schenkel das erste Ende (11) des Schwenkhebels (12) und der kürzere Schenkel das zweite Ende (13) des Schenkelhebels (12) aufweist oder bildet.

## Claims

1. An adjustment mechanism for adjusting movable furniture pieces, consisting of a linear actuator (1) attachable at components of the adjustment mechanism, said linear actuator (1) including a drive motor (2) with a threaded spindle (4) rotatably supported in a cladding tube (3) and arranged to be driven by the drive motor (2), a spindle nut (5) fitted on the threaded spindle (4) and non-rotatably but longitudinally displaceably guided in the cladding tube (3), and a slider (6) coupled in motion with the spindle nut (5) and longitudinally displaceably guided on the outside of the cladding tube (3) relative thereto, the slider (6) being coupled through a lever gear (7) with an actuator (8) for a furniture piece, preferably to a rotatable tube of the adjustment mechanism, and the cladding tube (3) including side faces, at least one of which includes a longitudinal slot (9) as an access for components of the slider (6) for connection to the spindle nut (5), and a lower side and an upper side, the slider (6) extending over the upper side, **characterized by that** at the part of the slider (6) preferably having a U-shaped cross-section and extending over the upper side of the cladding tube (3), a bearing block (10) protruding from the upper side is fixed or formed, that to the bearing block (10), a first end (11) of a pivoted lever (12) forming the lever gear is hinged, that the second end (13) of the pivoted lever (12) is hinged to a bearing tab (21) that is fastened to the actuator (8) for the furniture piece, in particular the rotatable tube, of the adjustment mechanism.

2. The adjustment mechanism for adjusting movable furniture pieces according to claim 1, **characterized by that** the bearing block (10) comprises two parallel bearing brackets (14) with through-holes, the first end (11) of the pivoted lever (12) being arranged therebetween and being penetrated by a head bolt (15) extending through the bearing brackets (14) and the first end (11), the head of the head bolt (15) being supported at a side face of a first bearing bracket (14), and the shaft of the head bolt (15) protruding beyond the second bearing bracket (14) and being secured and fixed by a pin (16) transversely extending through the protruding region.

3. The adjustment mechanism for adjusting movable furniture pieces according to claim 1 or 2, **characterized by that** the bearing tab (21) is configured as an L-shaped angled piece, the first leg (17) of which is penetrated at its end by a rivet (18), by means of which the second end (13) of the pivoted lever (12) is rotatably hinged.

4. The adjustment mechanism for adjusting movable furniture pieces according to claim 3, **characterized by that** in the second leg (19) of the angled piece, two holes are arranged spaced in the longitudinal direction of the leg (19) and are penetrated by head screws (20) that are screwed in threaded holes at the actuator (8) for the furniture piece, in particular at the rotatable tube, in threaded holes in the longitudinal direction thereof in a spaced manner.

5. The adjustment mechanism for adjusting movable furniture pieces according to one of claims 1 to 4, **characterized by that** the pivoted lever (12) has an L-shape, the longer leg including or forming the first end (11) of the pivoted lever (12), and the shorter leg including or forming the second end (13) of the pivoted lever (12).

## Revendications

1. Mécanisme de réglage pour régler des parties de meuble mobiles, consistant en un actionneur linéaire (1) fixable à des composants du mécanisme de réglage, cet actionneur linéaire (1) comportant un moteur d'entraînement (2) avec une tige filetée (4) montée tournant dans un tuyau d'habillage (3) et susceptible d'être entraînée par le moteur d'entraînement (2), une écrou broche (5) disposée sur la tige filetée (4) et guidée de manière non rotative mais déplaçable longitudinalement dans le tuyau d'habillage (3), et une glissière (6) accouplée en mouvement avec l'écrou broche (5) et guidée de manière longitudinalement déplaçable à l'extérieur sur le tuyau d'habillage (3) par rapport à celui-ci, la glissière (6) étant accouplée par l'intermédiaire d'un mécanisme à leviers (7) avec un actionneur (8) pour une partie de meuble, de préférence avec un tuyau rotatif du mécanisme de réglage, et le tuyau d'habillage (3) comportant des faces latérales, au moins une desquelles comporte une fente longitudinale (9) comme traversée pour des composants de la glissière (6) pour connexion à l'écrou broche (5), et une face inférieure et une face supérieure, la glissière (6) s'étendant sur la face supérieure, **caractérisé en ce qu'**à la partie de la glissière (6) de préférence ayant une section en U et s'étendant sur le côté supérieur du tuyau d'habillage (3), un patin (10) faisant saillie du côté supérieur est fixé ou agencé, qu'au patin (10), une première extrémité (11) d'un levier pivotant (12) formant le mécanisme à leviers est articulée, que la deuxième extrémité (13) du levier pivotant (12) est articulée à une languette palier (21) qui est fixée à l'actionneur (8) pour la partie de meuble, en particulier le tuyau rotatif, du mécanisme de réglage.

2. Mécanisme de réglage pour régler des parties de meuble mobiles selon la revendication 1, **caractérisé en ce que** le patin (10) comporte deus éléments de palier (14) parallèles avec des trous de passage, la première extrémité (11) du levier pivotant (12) étant arrangée entre ceux-ci et étant traversée par une pige de tête (15) traversant les éléments de palier (14) et la première extrémité (11), la tête de la pige de tête (15) étant en appui sur une face latérale d'un premier élément de palier (14), et la tige de la pige de tête (15) faisant saillie au-delà du deuxième élément de palier (14) et étant assurée et fixée par une goupille (16) s'étendant transversalement à travers la région faisant saillie.

3. Mécanisme de réglage pour régler des parties de meuble mobiles selon la revendication 1 ou 2, **caractérisé en ce que** la languette palier (21) est configurée de façon d'un coude en L, la première jambe (17) de laquelle est traversée à son extrémité par un rivet (18), au moyen duquel la deuxième extrémité (13) du levier pivotant (12) est articulée en rotation.

4. Mécanisme de réglage pour régler des parties de meuble mobiles selon la revendication 3, **caractérisé en ce que** dans la deuxième jambe (19) du coude, deux trous sont arrangés à distance dans la direction longitudinale de la jambe (19) et sont traversés par des vis à tête (20) qui sont engagées dans des trous filetés à l'actionneur (8) pour la partie de meuble, en particulier au tuyau rotatif, à distance dans la direction longitudinale de celui-ci.

5. Mécanisme de réglage pour régler des parties de meuble mobiles selon une des revendications 1 à 4, **caractérisé en ce que** le levier pivotant (12) a une forme en L, la jambe la plus longue comportant ou formant la première extrémité (11) du levier pivotant (12), et la jambe la plus courte comportant ou formant la deuxième extrémité (13) du levier pivotant (12).
